# EUROPEAN PATENT SPECIFICATION

(11) **EP 4 557 136 B1**
(45) Date of publication and mention of the grant of the patent: **27.05.2026**
(21) Application number: 23875000.4
(22) Date of filing: 16.06.2023
(51) Int. Cl.: G06F 21/53, G06F 21/60, G06F 21/74, G06F 21/62, G06F 9/50

(54) **ELECTRONIC DEVICE FOR PROVIDING TRUSTED EXECUTION ENVIRONMENT**
ELEKTRONISCHE VORRICHTUNG ZUR BEREITSTELLUNG EINER VERTRAUENSWÜRDIGEN AUSFÜHRUNGSUMGEBUNG
DISPOSITIF ÉLECTRONIQUE POUR FOURNIR UN ENVIRONNEMENT D'EXÉCUTION DE CONFIANCE

(30) Priority: 04.10.2022 KR 20220126054; 07.11.2022 KR 20220147159
(43) Date of publication of application: 21.05.2025
(73) Proprietor: Samsung Electronics Co., Ltd., Suwon-si, Gyeonggi-do 16677 (KR)
(72) Inventor: HAN, Chankyu, Suwon-si, Gyeonggi-do 16677 (KR)
(74) Representative: Gulde & Partner
(86) International application number: PCT/KR2023/008383
(87) International publication number: WO 2024/075929

(56) References cited:
- WO-A1-2020/182302
- CN-A- 112 817 697
- CN-A- 115 017 497
- CN-A- 115 017 497
- KR-A- 20170 142 672
- KR-B1- 102 217 501
- US-A1- 2021 192 056
- ANONYMOUS: "TEE System Architecture Version 1.2", 2 November 2018 (2018-11-02), XP055969741, Retrieved from the Internet <URL:https://globalplatform.org/wp-content/uploads/2017/01/GPD_TEE_SystemArch_v1.2_PublicRelease.pdf> [retrieved on 20221011]
- TSCHOFENIG ARM LTD M PEI BROADCOM D WHEELER INTEL D THALER MICROSOFT A TSUKAMOTO AIST H: "Trusted Execution Environment Provisioning (TEEP) Protocol; draft-ietf-teep-protocol-04.txt", no. 4, 3 November 2020 (2020-11-03), pages 1 - 32, XP015142806, Retrieved from the Internet <URL:https://tools.ietf.org/html/draft-ietf-teep-protocol-04> [retrieved on 20201103]

## Description

### [Technical Field]

The disclosure relates to an electronic device that provides a trusted execution environment (TEE).

### [Background Art]

A TEE may restrict an application executed in a rich execution environment (REE) (general execution environment) from accessing a secure area, and may safely defense the secure area (e.g., secure processor, secure memory) from the REE or an external device. An operating system (OS) included in the TEE may provide an important function for security that needs to be separated from an application executed in the REE. The TEE OS may be developed by a manufacturer that produces a chip (e.g., system on chip (SOC)) or an electronic device (e.g., smartphone) embedded with a chip. Based on specifications related to a TEE OS and/or an application programming interface (API) for connecting the TEE OS and an application, which are provided from the manufacturer, a developer may develop an application (trusted application) executable in the TEE and/or a service using the corresponding application (e.g., Internet banking or electronic payment service using biometric authentication). The developed application or service may be deployed (deployment) so that users may use the same.

### [Disclosure of Invention]

### [Technical Problem]

A TEE may be installed in an electronic device (e.g., smartphone) and may be executed by a secure area (e.g., secure processor) of the corresponding electronic device, and may protect at least some blocks (e.g., secure memory) in the secure area from an REE or an external device. When specifications related to a secure area of a processor is not provided to a developer, it is difficult to develop an application or service related to security, and thus a security service may not be provided to a user in the corresponding electronic device.

A plurality of TEEs which are classified by provided security function (e.g., data encryption, artificial intelligence, financial services, trustable user interface) may be installed in an electronic device. In this instance, a developer may not be easy to identify hardware to which each TEE is connected and a function provided by each TEE, and thus may have difficulty in developing an application or a service. For example, a developer who desires to develop a camera-related security service may need to accurately recognize a TEE connectable to a camera from among the plurality of TEEs and a function provided by the corresponding TEE, so as to develop and deploy a related service.

According to various embodiments, to a client (e.g., an application operating in the REE) that requests execution of a security function, an electronic device provides information associated with functions executable in TEEs contained in the electronic device so as to provide various and useful services to a user in association with security.

The technical subject matter of the disclosure is not limited to the above-mentioned technical subject matter, and other technical subject matters which are not mentioned may be understood by those skilled in the art based on the following description.

Conventional devices are disclosed in WO 2020/182302 A1, CN 115017497 A, document "TEE System Architecture Version 1.2" and document "Trusted Execution Environment Provisioning (TEEP) Protocol" (TSCHOFENIG ARM LTD et al.).

### [Solution to Problem]

The present invention is set out in the appended set of claims.

According to an embodiment, an electronic device may include a processor and a first memory connected to the processor, and divided into a first normal area that provides a rich execution environment (REE) and a first secure area that provides a plurality of trusted execution environments (TEEs) to which access by software executed in the REE is controllable. The first memory may store instructions which, when executed by the processor, cause the processor to obtain, from the plurality of TEEs, capability information indicating functions that the plurality of TEEs are capable of executing. The instructions may cause the processor to provide the capability information to an application executed in the REE so that the application identifies a TEE capable of executing a required function.

According to an embodiment, an electronic device may include a first memory divided into a first normal area that provides a rich execution environment (REE) and a first secure area that provides a plurality of trusted execution environments (TEEs) to which access by software executed in the REE is controllable. A method of operating the electronic device may include an operation of obtaining, from the plurality of TEEs, capability information indicating functions that the plurality of TEEs are capable of executing. The method may include an operation of providing the capability information to an application executed in the REE so that the application identifies a TEE capable of executing a required function.

### [Advantageous Effects of Invention]

According to various embodiments, the advantages of a multi-TEE may be maximized and TEEs in the multi-TEE may be capable of performing service exchange therebetween and dynamic service configuration. In addition, various effects directly or indirectly recognized from the disclosure can be provided.

### [Brief Description of Drawings]

Fig. 1 is a block diagram illustrating an electronic device in a network environment according to various embodiments.
Fig. 2 is a block diagram 200 illustrating the program 140 according to various embodiments.
FIG. 3 illustrates a hierarchical architecture of an electronic device according to an embodiment;
FIG. 4 illustrates a connection structure between components in hardware of an electronic device according to an embodiment;
FIG. 5 illustrates components of hardware respectively connected to TEEs according to an embodiment;
FIG. 6 illustrates pieces of software configured to execute a security function requested by a client according to an embodiment;
FIG. 7 illustrates an exemplary format of capability information that a TEE provides to a secure management module according to an embodiment;
FIG. 8 is a flowchart illustrating operations for enabling a TEE to execute a security function requested by a client according to an embodiment; and
FIG. 9 is a flowchart illustrating operations of a processor according to an embodiment.

### [Mode for the Invention]

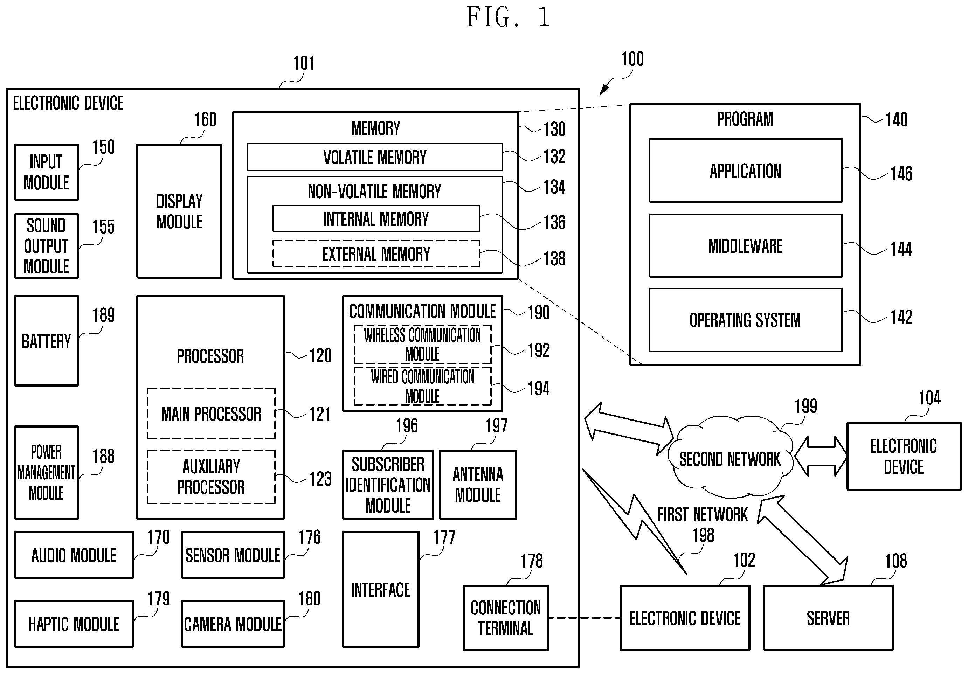

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

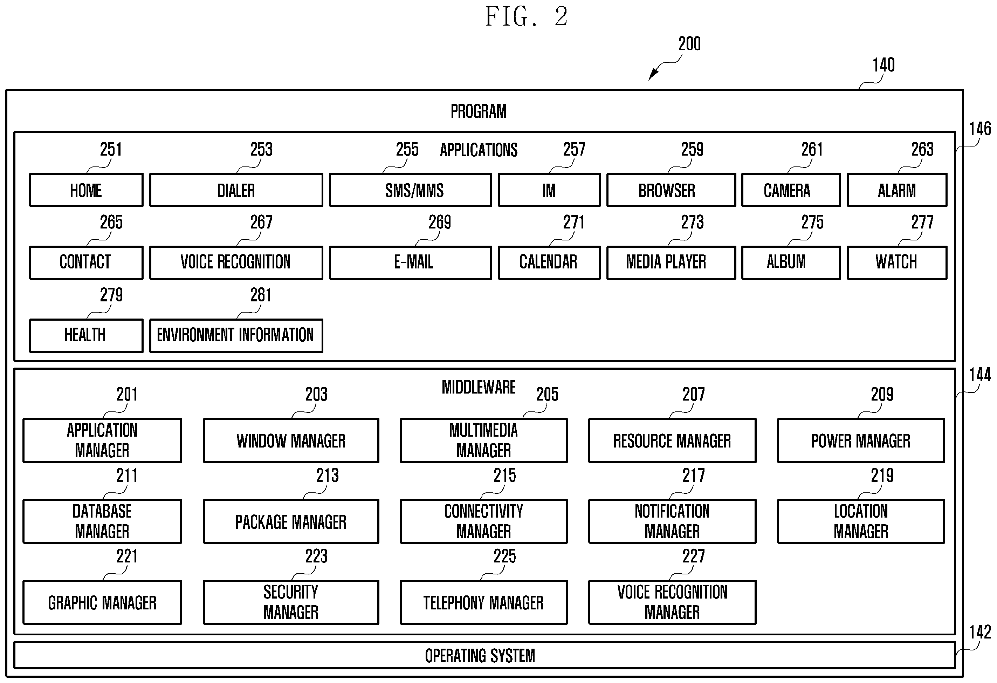

Fig. 2 is a block diagram 200 illustrating the program 140 according to various embodiments. According to an embodiment, the program 140 may include an operating system (OS) 142 to control one or more resources of the electronic device 101, middleware 144, or an application 146 executable in the OS 142. The OS 142 may include, for example, AndroidTM, iOSTM, WindowsTM, SymbianTM, TizenTM, or BadaTM. At least part of the program 140, for example, may be preloaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130.The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display module or a camera module of the external electronic device). The device management application, additionally or alternatively, may support installation, delete, or update of an application running on the external electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

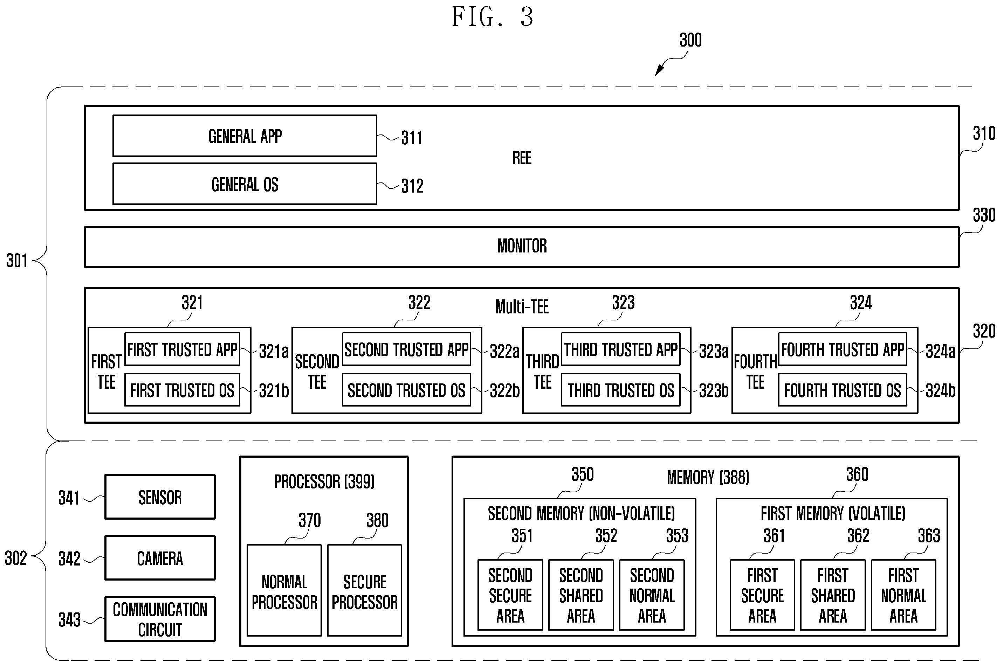

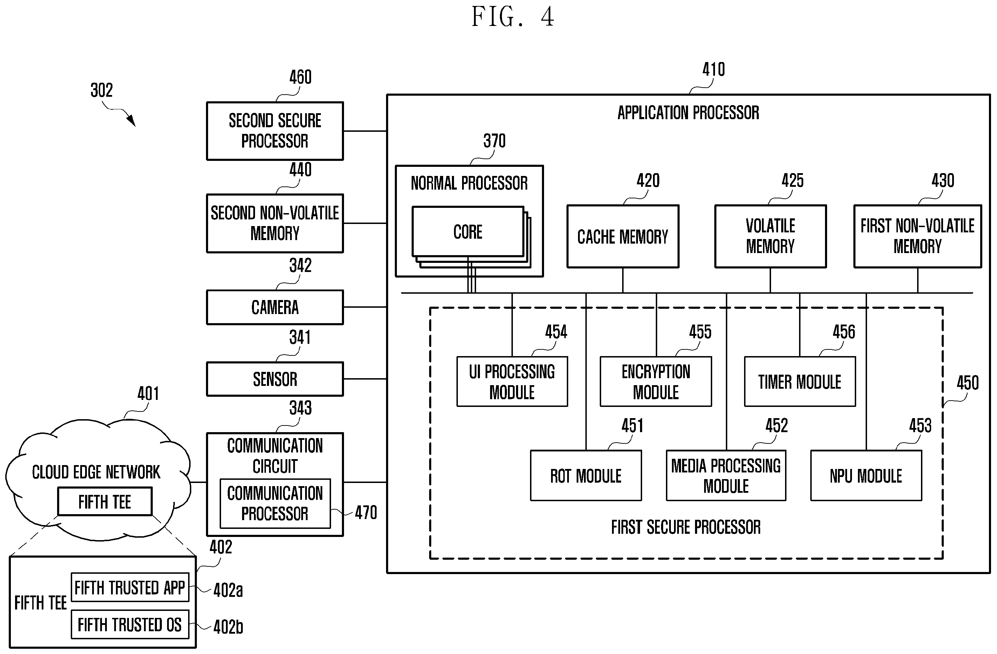

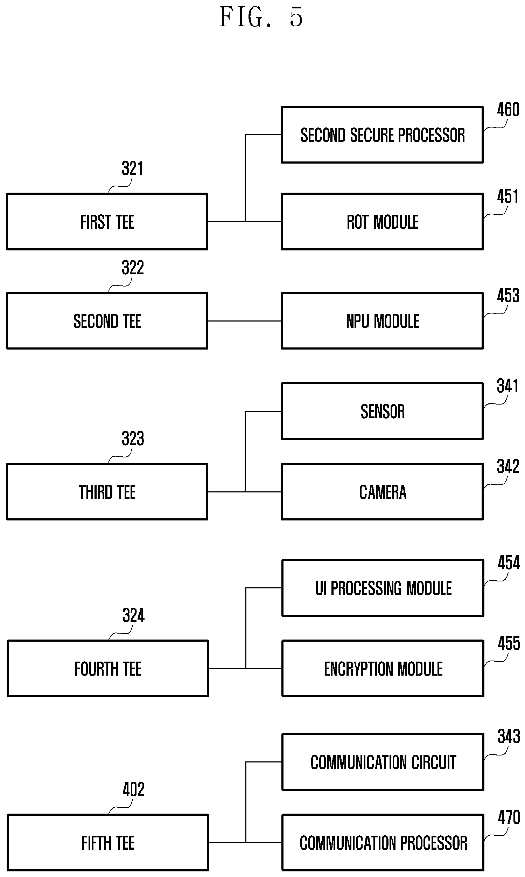

FIG. 3 illustrates a hierarchical architecture of an electronic device 300 according to an embodiment. FIG. 4 illustrates a connection structure between components in hardware 302 of the electronic device 300 according to an embodiment. FIG. 5 illustrates components of hardware respectively connected to TEEs 321, 322, 323, 324, and 402 according to an embodiment. In descriptions provided with reference to FIGS. 3, 4, and 5, a redundant description of a component that has been described with reference to FIGS. 1 and 2 will be omitted or briefly provided.

Referring to FIG. 3, the electronic device 300 (e.g., electronic device 101 of FIG. 1) may include software 301 and hardware 302. The software 301 may include an REE 310, a plurality of TEEs (hereinafter, multi-TEE) 320, and a monitor 330. The hardware 302 may include a sensor 341, a camera 342, a communication circuit 343, a memory 388, and a processor 399. The memory 388 may include a first memory 360 that is a volatile memory and a second memory 350 that is a non-volatile memory. The processor 399 may include a normal processor 370 and a secure processor 380. The secure processor 380 may include a single processor for processing a security-related function or a plurality of processors physically distinguished.

The software 301 (e.g., program 140) may be stored in the second memory 350 (e.g., non-volatile memory 134) as instructions, and may be loaded to the first memory 360 (e.g., volatile memory 132) and may be executed by the processor 399 (e.g., processor 120).

The first memory 360 may include a first secure area 361, a first shared area 362, and a first normal area 363. The second memory 350 may include a second secure area 351, a second shared area 352, and a second normal area 353. According to an embodiment, the second shared area 352 may be omitted in the second memory 350, and the second memory 350 may include the second secure area 351 and the normal area 352. According to an embodiment, the first shared area 362 may be omitted in the first memory 360.

The REE 310 may be installed in the second normal area 353 and/or the second shared area 352 of the second memory 350. The REE 310 may be loaded from an area of the second memory 350 where the REE 310 is installed, to the first normal area 363 and/or the first shared area 362 of the first memory 360, and may be executed by the processor 399. The REE 310 may include a general application 311 and a general OS 312. The general OS 312 may be a host OS of the electronic device 300, and may include, for example, Android^{™}, iOSTM, Windows^{™}, Symbian^{™}, Tizen^{™}, or Bada^{™}.

The multi-TEE 320 may be installed in the second secure area 351 and/or the second shared area 352 of the second memory 350. The multi-TEE 320 may be loaded from an area of the second memory 350 where the multi-TEE 320 is installed, to the first secure area 361 and/or the first shared area 362 of the first memory 360, and may be executed by the processor 399. The multi-TEE 320 may include a first TEE 321, a second TEE 322, a third TEE 323, and a fourth TEE 324, but the number of TEEs is not limited. For example, the TEEs 321, 322, 323, and 324 may be classified by function providable to a client (e.g., general application 311).

According to an embodiment, the first TEE (e.g., system on chip (SOC) TEE) 321 may provide a root of trust (RoT) function that verifies the state of the electronic device 300. Information provided by the RoT function may include at least one from among a verified booting state, information indicating whether an electronic device is in a locked state, an operating system version, a point in time at which a patch is performed, and/or a patch level. The first TEE 321 may provide a function of storing an encryption key (e.g., enclave key). The first TEE 321 may be operatively connected to a designated component (e.g., secure processor 380) in the hardware 302. A first trusted application (hereinafter, App) 321a and a first trusted OS 321b may be executed in the first TEE 321. The first trusted OS 321b may provide an environment where the components included in the first TEE 321 may operate. For example, the first trusted OS 321b may provide an interface needed for storing an RoT and/or encryption key. The first trusted OS 321b may provide an application programming interface (API) for connecting the first trusted App 321a and the hardware 302 (e.g., secure processor 380). As an example of the first trusted OS 321b, the first trusted OS 321b may include an OS for storing an RoT and/or encryption key. In the document, "connecting" a TEE to designated hardware may refer to a TEE's controlling of hardware so that the hardware performs its function or service or a TEE's managing (e.g., protecting, encrypting, storing, updating, providing) of data generated when a function or service related to hardware is performed.

According to an embodiment, the second TEE 322 (e.g., original equipment manufacturer (OEM) TEE) may provide a trustable user interface. The second TEE 322 may be operatively connected to a designated component (e.g., secure processor 380) in the hardware 302. A second trusted App 322a and a second trusted OS 322b may be executed in the second TEE 322. The second trusted OS 322b may provide an environment where the components included in the second TEE 322 may operate. For example, the second trusted OS 322b may provide a trustable user interface. The second trusted OS 322b may provide an API for connecting the second trusted App 322a and the hardware 302 (e.g., secure processor 380). As an example of the second trusted OS 322b, the second trusted OS 322b may include an OS for providing a trustable user interface.

According to an embodiment, the third TEE 323 (e.g., OEM TEE) may provide a trustable user interface. The third TEE 323 may be operatively connected to a designated component (e.g., sensor 341, camera 342) in the hardware 302. A third trusted App 323a and a third trusted OS 323b may be executed in the third TEE 323. The third trusted OS 323b may provide an environment where the components included in the third TEE 323 may operate. For example, the third trusted OS 323b may provide a trustable user interface. The third trusted OS 323b may provide an API for connecting the third trusted App 323a and the hardware 302 (e.g., sensor 341, camera 342). As an example of the third trusted OS 323b, the third trusted OS 323b may include an OS for providing a trustable user interface.

According to an embodiment, the fourth TEE 324 (e.g., over the air programming (OTA) TEE) may provide an online financial service. The third TEE 323 may be operatively connected to a designated component (e.g., secure processor 380) in the hardware 302. A fourth trusted App 324a and a fourth trusted OS 324b may be executed in the fourth TEE 324. The fourth trusted OS 324b may provide an environment where the components included in the fourth TEE 324 may operate. For example, the fourth trusted OS 323b may provide an online financial service. The fourth trusted OS 324b may provide an API for connecting the fourth trusted App 324a and the hardware 302 (e.g., secure processor 380). As an example of the fourth trusted OS 324b, the fourth trusted OS 324b may include an OS for providing an online financial service.

The monitor 330 may be installed in at least one of the second secure area 351, the second shared area 352, and the second normal area 353 of the second memory 350. The monitor 330 may be loaded from an area of the second memory 350 where the monitor 330 is installed, to the first secure area 361 and/or the first shared area 362 of the first memory 360, and may be executed by the processor 399. The monitor 330 may relay or control the communication between the REE 310 and the TEE 320. The REE 310 may not directly access the TEE 320 (e.g., read data from the TEE 320) but may be configured to access the TEE 320 via the monitor 330. In the case of the monitor 330, for example, the TrustZone technology of Advance RISC Machine (ARM) may be applied.

The application 311 (e.g., application 146 of FIG. 1 or FIG. 2) may provide, to a user, a function or service that requires user authentication. For example, the application 311 may be an application that provides an online service (e.g., untact credit card issuance, financial transaction, digital car key for starting up a rental car or shared car) via communication with an external device (e.g., server 108 of FIG. 1). The application 311 may be an application that provides an offline service (e.g., an identification service provided when purchasing products (cigarettes) in an offline store). The application 311 may include an application preloaded in the electronic device 300 and/or an application downloaded and installed. The application 311 according to various embodiments is not limited by type if the application includes a function related to user authentication or security.

A trusted application or trusted OS executable in the multi-TEE 320 may use the sensor 341 and/or camera 342 in order to obtain data that requires protection. For example, the sensor 341 may include a fingerprint sensor used for obtaining fingerprint information. The camera 342 (e.g., camera module 180) may be used for obtaining iris or face information. In the REE 310, the general application 311 or general OS 312 may access a TEE existing in the outside (e.g., cloud server) via the communication circuit 343 (e.g., communication module 190).

Referring to FIG. 4, the hardware 302 may include the sensor 341, the camera 342, the communication circuit 343, the normal processor 370, a cache memory 420, a volatile memory 425 (e.g., first memory 360), a first non-volatile memory 430, a second non-volatile memory 440, a first secure processor 450, a second secure processor 460, and a communication processor 470. The volatile memory (e.g., random access memory (RAM)) 425, the normal processor 370, the cache memory 420, the first non-volatile memory 430, and the first secure processor 450 may be integrated into an application processor 410, as a single chip (e.g., system on chip (SOC)).

The secure processor 380 in FIG. 3 may include the first secure processor 450 integrated into the application processor 410 and/or the second secure processor 460 configured outside the application processor 410. The second memory 350 in FIG. 3 may include the first non-volatile memory 430 (e.g., read only memory (ROM)) integrated into the application processor 410 and/or the second non-volatile memory 440 (e.g., flash memory or universal flash storage (UFS)) configured outside the application processor 410. The first non-volatile memory 430 may include part of the second secure area 351, part of the second shared area 352, and/or part of the second normal area 353. The second non-volatile memory 440 may include another part of the second secure area 351, another part of the second shared area 352, and/or another part of the second normal area 353.

The first secure processor 450 may be divided into a plurality of modules based on secure elements embedded in the application processor 410. For example, the first secure processor 450 may include at least one of an RoT module 451, a media processing module 452, an NPU module 453, a user interface (UI) processing module 454, an encryption module 455, and a timer module 456. The RoT module 451 may be configured to support the first TEE 321's provision of a function of storing an RoT and encryption key. The media processing module 452 may be configured to process media information. The NPU module 453 may be configured to support the second TEE's 322 provision of a trustable user interface, and to process a plurality of operations (e.g., multiple simultaneous matrix operations) for artificial intelligence. The UI processing module 454 may be configured to support the fourth TEE's 324 provision of an online financial service. The encryption module 455 may be configured to support the fourth TEE's 324 provision of an online financial service. The timer module 456 may be configured to detect a situation in which a system is uncontrollable (e.g., infinite loop), and to reset the system.

The communication processor 470 may be configured as a single chip with the communication circuit 343, but it is not limited thereto. The communication processor 470 may support the general application 311 or general OS 312 in the REE 310 to access the fifth TEE 402 configured in a cloud edge network 401 via the communication circuit 343.

According to an embodiment, the fifth TEE 402 (e.g., cloud TEE) may provide a service using an artificial intelligence model. The fifth TEE 402 may be operatively connected to a designated component (e.g., communication circuit 343 and communication processor 470) in the hardware 302. A fifth trusted App 402a and a fifth trusted OS 402b may be executed in the fifth TEE 402. The fifth trusted OS 402b may provide an environment where the components included in the fifth TEE 402 may operate. For example, the fifth trusted OS 402b may provide a service using an artificial intelligence model. The fifth trusted OS 402b may provide an API for connecting the fifth trusted App 402a and the hardware 302 (e.g., communication circuit 343 and communication processor 470). As an example of the fifth trusted OS 402b, the fifth trusted OS 402b may include an OS for providing a service using an artificial intelligence model.

Referring to FIG. 5, the first TEE 321 may be connected to the second secure processor 460 and the RoT module 451, and may provide a function of storing an RoT and encryption key to a client (e.g., general application 311) that requests execution of the function, by using the connected hardware components 460 and 451. The second TEE 322 may be connected to the NPU module 453, and may provide a trustable user interface to a client by using the NPU module 453. The third TEE 323 may be connected to the sensor 341 and the camera 342, and may provide a trustable user interface to a client by using the connected hardware components 341 and 342. The fourth TEE 324 may be connected to the UI processing module 454 and the encryption module 455, and may provide an online financial service to a client by using the connected hardware components 454 and 455. The fifth TEE 402 may be connected to the communication circuit 343 and the communication processor 470, and may provide a service using an artificial intelligence model to a client by using the connected hardware components 343 and 470. The connection illustrated in FIG. 5 is merely an example, and the type of hardware connected to a TEE and a service provided via the connection are not limited.

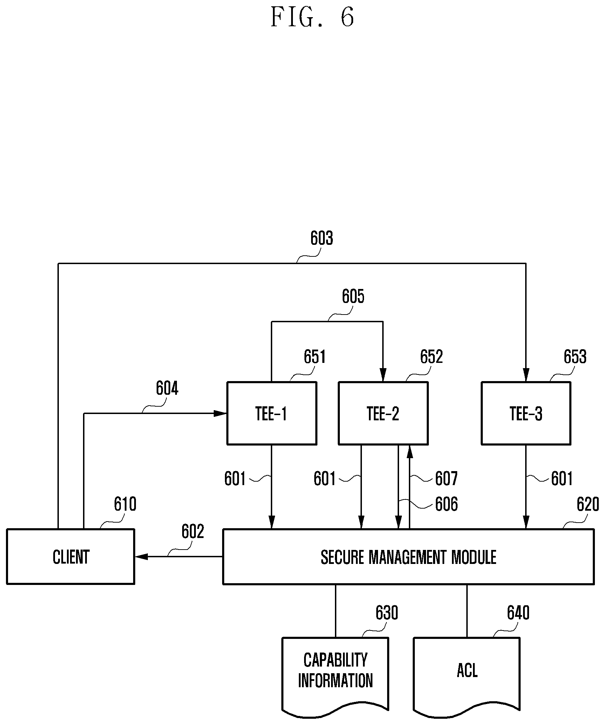

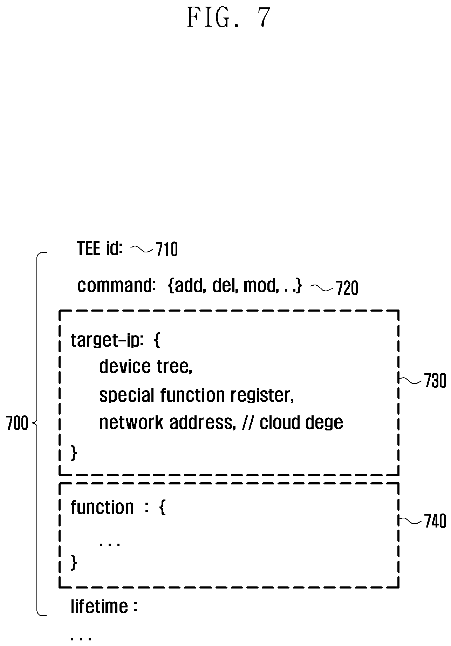

FIG. 6 illustrates pieces of software configured to execute a security function requested by a client according to an embodiment. FIG. 7 illustrates an exemplary format of capability information that a TEE provides to a secure management module 620 according to an embodiment.

Referring to FIG. 6, a client 610 may access TEEs 651, 652, and 653 via the secure management module 620. According to an embodiment, the secure management module 620 (e.g., secure exception layer 2 (S-EL2) may manage capability information 630 and an access control list (ACL) 640, and may store the same in a secure area (e.g., first secure area 361 or second secure area 351). The secure management module 620 may operate in a mode (e.g., privileged mode) that assigns privilege (or permission) for the client 510 (e.g., general application 311) to access TEEs 651, 652, and 653. The secure management module 620 may be stored in the second secure area 351 and/or second shared area 352 of the second memory 350, as instructions executable by the processor 399. The secure management module 620 may be loaded from an area of the second memory 350 where the secure management module 620 is installed, to the first secure area 361 and/or the first shared area 362 of the first memory 360, and may be executed by the processor 399. The secure management module 620 may be included in the software 301. For example, the secure management module 620 may be a software module that separately exists between the monitor 330 and the multi-TEE 320.

The TEEs 651, 652, and 653 may provide information indicating their capability information to the secure management module 620 in operation 601 when they are installed in the second memory 350 (e.g., first non-volatile memory 430 or second non-volatile memory 440) of the electronic device 300 or when they are loaded (loading) from the second memory 350 to the first memory 360 (e.g., first secure area 361 and/or first shared area 362). A cloud TEE (e.g., fifth TEE 402) may be included in the TEEs 651, 652, and 653. The secure management module 620 may request capability information of the cloud TEE from the cloud edge network 401 via communication circuit 343. The secure management module 620 may receive the capability information of the cloud TEE as a response to the request. The capability information may include information indicating a function that is providable to the client 610 via the corresponding TEE. The secure management module 620 may reconfigure, in the form of feature map, the capability information 630, received from each TEE 651, 652, and 653 and may store the same in a secure area (e.g., second secure area 351 or first secure area 361) of a memory.

The secure management module 620 may provide the capability information 630 to the client 610 in response to a request from the client 610 in operation 602. Based on the provided capability information 630, the client 610 may identify the TEE-1 651, TEE-2 652, and TEE-3 653 installed in the electronic device 300. The TEE-1 651 may be one of the TEEs 321, 322, 323, 324, and 402 illustrated in FIG. 5. The TEE-2 652 may be another one of the TEEs 321, 322, 323, 324, and 402. The TEE-3 653 may be another one of the TEEs 321, 322, 323, 324, and 402. The client 610 may identify, based on the capability information 630, functions executable by the TEEs 651, 652, and 653 installed in the electronic device 300. Based on the capability information 630, the client 610 may recognize a TEE that is capable of executing a function required by the client 610 from among the TEEs 651, 652, and 653. Based on the capability information 630, the client 610 may recognize a TEE that is capable of executing a required function from among the TEEs 651, 652, and 653.

According to an embodiment, the client 610 may directly request the TEE, recognized as a TEE capable of executing a required function, to execute the function. For example, based on the capability information 630, the client 610 may recognize that the TEE-3 653 is capable of executing a required function, and request the TEE-3 653 to execute the function in operation 603. In response to the request in operation 603, the TEE-3 653 may load a corresponding trusted application to a secure area (e.g., first secure area 361) of a volatile memory, and may safely execute the same in the secure area.

According to an embodiment, via another TEE, the client 610 may indirectly request the TEE, recognized as a TEE capable of executing the required function, to execute the function. Based on the capability information 630, the client 610 may recognize that the TEE-2 652 is capable of executing a required function. The client 610 may select the TEE-1 651 as an agent to transfer the request of the client 610. For example, the client 610 may arbitrarily select one of the TEEs 651, 652, and 653 as an agent. According to an embodiment, TEE-1 651 may be designated as an agent from among the TEEs 651, 652, and 653. The client 610 may identify a designated agent based on the provided capability information 630. The client 610 may request, from the TEE-1 651 which is an agent, execution of the function by the TEE-2 652 in operation 604. In response to the request in operation 604, the TEE-1 651 may request the TEE-2 652 to execute the function required by the client 610 in operation 605. The TEE-2 652 may request the secure management module 620 to identify and report whether the TEE-1 651 has a privilege as an agent in operation 606. In response to the request in operation 606, the secure management module 620 may identify the ACL 640 and may provide an identification result to the TEE-2 652 in operation 607. The TEE-2 652 may recognize, based on the identification result, that the TEE-1 651 has a privilege as an agent. Accordingly, in response to the request in operation 605, the TEE-2 652 may load a corresponding trusted application to a secure area (e.g., first secure area 361) of a volatile memory, and may safely execute the same in the secure area.

Referring to FIG. 7, capability information 700 (e.g., capability information 630) that a TEE provides to the secure management module 620 may include identification information (e.g., TEE ID) for identifying the corresponding TEE, an item 720 indicating an instruction, an item 730 for identifying a target intellectual property (IP) (hardware connected to the corresponding TEE), and an item 740 indicating providable functions. The item 730 may include, for example, a device tree (DT) and a special function register (SFR), as information for specifying a target IP by the electronic device 300. When the corresponding TEE is a cloud TEE, a network address may be included in the item 730.

The secure management module 620 may reconfigure the capability information 700, provided from the TEE, to be in the form of a feature map (or feature table) as illustrated in Table 1 given below, and may store the same in a secure area (e.g., second secure area 351 or first secure area 361) of a memory.

**[Table 1]**

| Target IP index | Owner TEE | Feature | Function list |
|---|---|---|---|
| 1: Display | TEE ID 2 | Display | TEE_showBitmap, |
| | | | TEE_updateDisplay, ... |
| 2: NPU | TEE ID 4 | (Artificial intelligence/machine learning (AI/ML)) | TEE_Diag, |
| | | | TEE_Identify, |
| | | | TEE_MatrixPad, ... |
| 3: Crypto | TEE ID 1 | Root of Trust | TEE_VerifyRoT, |
| | | | TEE_GetRoT |
| 4: Memory | TEE ID 1 | Trusted storage | TEE_AllocatePersistentStorage, ... |
| ... | ... | ... | ... |

The client 610 may recognize a function that a TEE provides by using a feature map reconfigured based on the capability information of the corresponding TEE. For example, in the case of a TEE having "TEE ID2" as an ID, "display-map" may be recorded for the DT of the item 730 and "0xABCDEF" may be recorded for the SFR. In the reconfigured feature map, "TEE_ShowBitmap" and "TEE_UpdateDisplay" may be recorded as standardized API lists in the function list. The client 610 provided with the feature map may recognize that the corresponding TEE is a TEE that provides a function related to a display. The client 610 may request the corresponding TEE to execute a function related to a display.

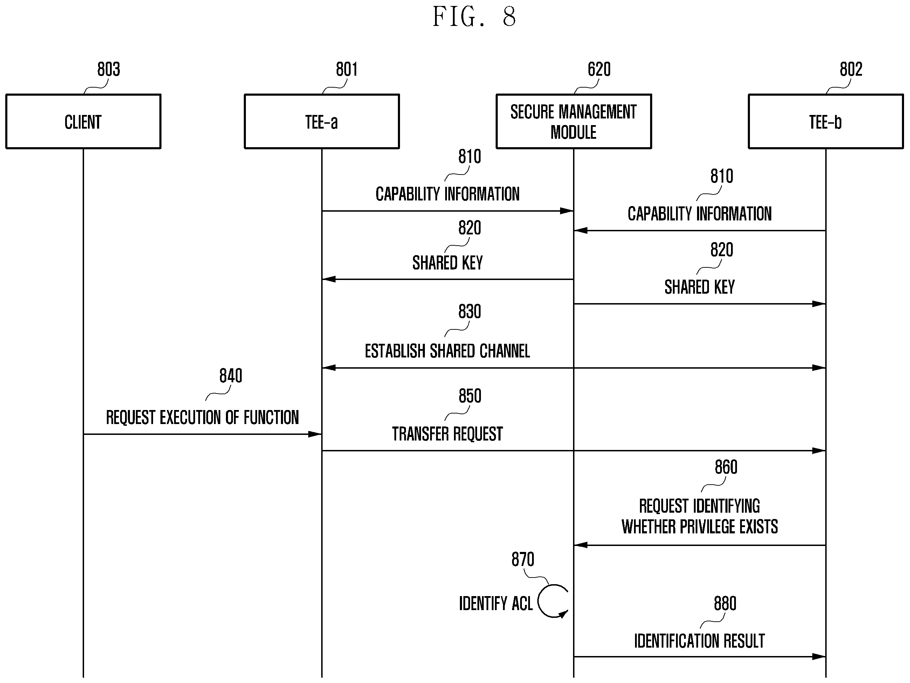

FIG. 8 is a flowchart illustrating operations for enabling a TEE to execute a security function requested by a client according to an embodiment.

In operation 810, the secure management module 620 may receive capability information from TEEs (e.g., TEE-a 801 and TEE-b 802). The secure management module 620 may reconfigure capability information in the form of a feature map, and may store the same in a secure area of a memory.

In operation 820, the secure management module 620 may provide, to the TEEs 801 and 802, a key (e.g., per-distrusted key) used when capability information is shared between TEEs.

In operation 830, via a shared key-based key agreement process (e.g., pairwise key agreement) performed between the TEEs 801 and 802, the TEEs 801 and 802 may share capability information and may establish a shared channel for exchanging data (e.g., a function execution request message of a client, a binary of a trusted application (TA)).

In operation 840, the client 803 may request, from the TEE-a 801 which is an agent, execution of the function by the TEE-b 802. In operation 850, the TEE-a 801 may transfer the request of the client 803 to the TEE-b 802. In operation 860, the TEE-b 802 may request the secure management module 620 to identify and report whether the TEE-a 801 is a TEE that has a privilege as an agent. In operation 870, the secure management module 620 may identify the ACL 640, and may report an identification result to the TEE-b 802 in operation 880. The TEE-b 802 may recognize, based on the identification result, that the TEE-a 801 has a privilege as an agent. Accordingly, in response to the request from the client 803, the TEE-b 802 may load a corresponding trustable application to a secure area (e.g., first secure area 361) of a volatile memory, and may safely execute the same in the secure area.

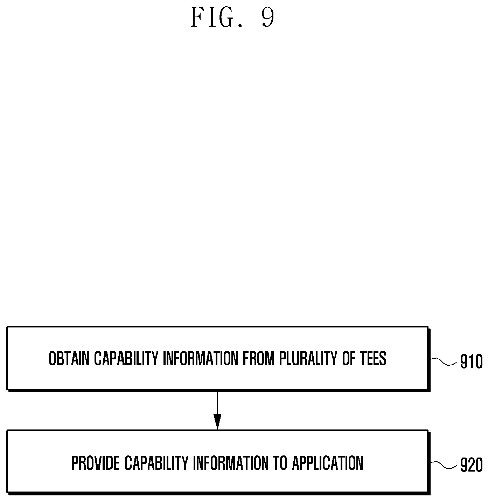

FIG. 9 is a flowchart illustrating operations of a processor according to an embodiment. The processor may include, for example, the secure processor 380. The processor may be connected to a memory (e.g., first memory 360), and the memory may include a first normal area that provides a rich execution environment (REE), and a first secure area that provides a plurality of trusted execution environments (TEEs) to which access by software executed in the REE is controllable.

In operation 910, the processor may obtain, from the plurality of TEEs, capability information (e.g., capability information 630) indicating functions that the plurality of TEEs are capable of executing. In operation 920, the processor may provide the capability information to an application executed in the REE so that the application identifies a TEE capable of executing a function required by the application.

According to an embodiment, an electronic device (e.g., electronic device 300) may include a processor (e.g., processor 399) and a first memory (e.g., first memory 360) connected to the processor and divided into a first normal area that provides a rich execution environment (REE) and a first secure area that provides a plurality of trusted execution environments (TEEs) to which access by software executed in the REE is controllable. The first memory may store instructions which, when executed by the processor, cause the processor to obtain, from the plurality of TEEs, capability information indicating functions that the plurality of TEEs are capable of executing. The instructions may cause the processor to provide the capability information to an application executed in the REE so that the application identifies a TEE capable of executing a required function.

A first TEE, one of the plurality of TEEs, may be configured to receive a request from the application. The instructions may cause the processor to receive a request of a second TEE which is another one of the plurality of TEEs, the request requesting identifying and reporting of whether the first TEE has a privilege as an agent, and to provide an identification result indicating that the first TEE has a privilege as an agent to the second TEE. The second TEE may be configured to execute, based on the identification result, a function corresponding to the request of the application transferred via the first TEE.

The application may be configured to recognize, based on the capability information, a TEE for executing a required function from among the plurality of TEEs, and to request the recognized TEE to execute the function.

The first memory may be a volatile memory. The electronic device may include a second memory (e.g., second memory 350), which is connected to the processor and is a non-volatile memory divided into a second normal area that provides the REE and a second secure area that provides the plurality of TEEs. The instructions may cause the processor to obtain the capability information, based on a fact that the plurality of TEEs are loaded from the second secure area to the first secure area.

The instructions may cause the processor to obtain the capability information, based on a fact that the plurality of TEEs are installed in the first memory.

The electronic device may further include a communication circuit (e.g., communication circuit 343). The instructions may cause the processor to receive capability information of a TEE installed in a cloud edge network via the communication circuit. The instructions may cause the processor to provide the received capability information to the application.

The electronic device may further include a sensor (e.g., sensor 341) and a camera (e.g., camera 342). At least one of the plurality of TEEs may execute a function related to security by using the sensor and the camera.

The processor may include a normal processor for executing the REE and a first secure processor (e.g., first secure processor 450) for executing at least one of the plurality of TEEs. The electronic device may include a second secure processor (e.g., second secure processor 460) for executing at least one of the plurality of TEEs.

The second secure processor may be configured with a first processing module configured to support a root of trust (RoT) function to one of the plurality of TEEs, a second processing module configured to support a trustable user interface to another one of the plurality of TEEs, a third processing module configured to support an online financial service to another one of the plurality of TEEs, and a fourth processing module configured to support an encryption function to another one of the plurality of TEEs.

According to an embodiment, an electronic device may include a first memory divided into a first normal area that provides a rich execution environment (REE) and a first secure area that provides a plurality of trusted execution environments (TEEs) to which access by software executed in the REE is controllable. A method of operating the electronic device may include an operation (e.g., operation 910) of obtaining, from the plurality of TEEs, capability information indicating functions that the plurality of TEEs are capable of executing. The method may include an operation (e.g., operation 920) of providing the capability information to an application executed in the REE so that the application identifies a TEE capable of executing a required function.

The method may include an operation of receiving, by a first TEE which is one of the plurality of TEEs, a request of the application. The method may include an operation of receiving a request of a second TEE which is another one of the plurality of TEEs, the request requesting identifying and reporting of whether the first TEE has a privilege as an agent. The method may include an operation of providing an identification result indicating that the first TEE has a privilege as an agent to the second TEE. The method may include an operation of executing, by the second TEE, a function corresponding to the request of the application transferred via the first TEE based on the identification result.

The method may further include an operation by the application which recognizes, based on the capability information, a TEE for executing a required function from among the plurality of TEEs, and requests the recognized TEE to execute the function.

The first memory may be a volatile memory. The electronic device may include a second memory that is connected to the processor and is a non-volatile memory divided into a second normal area that provides the REE and a second secure area that provides the plurality of TEEs. The capability information may be obtained based on a fact that the plurality of TEEs are loaded from the second secure area to the first secure area.

The capability information may be obtained based on a fact that the plurality of TEEs are installed in the first memory.

The operation of providing the capability information may include an operation of receiving capability information of a TEE installed in a cloud edge network via a communication circuit of the electronic device, and an operation of providing the received capability information to the application.

## Claims

1. An electronic device comprising:
a processor; and
a first memory connected to the processor and divided into a first normal area that provides a rich execution environment, REE, and a first secure area that provides a plurality of trusted execution environments, TEEs, to which access by software executed in the REE is controllable,
wherein the first memory stores instructions which, when executed by the processor, cause the processor to:
obtain, from the plurality of TEEs, capability information indicating functions that the plurality of TEEs are capable of executing; and
provide the capability information to an application executed in the REE so that the application identifies, based on the capability information, a TEE capable of executing a required function from among the plurality of TEEs, and requests the recognized TEE to execute the required function.

2. The electronic device of claim 1, wherein a first TEE, one of the plurality of TEEs, is configured to receive a request from the application, and
wherein the instructions cause the processor to receive a request of a second TEE which is another one of the plurality of TEEs, the request requesting identifying and reporting of whether the first TEE has a privilege as an agent, and to provide an identification result indicating that the first TEE has a privilege as an agent to the second TEE, and
wherein the second TEE is configured to execute, based on the identification result, a function corresponding to the request of the application transferred via the first TEE.

3. The electronic device of claim 1, wherein the first memory is a volatile memory, and the electronic device comprises a second memory, which is connected to the processor and is a non-volatile memory divided into a second normal area that provides the REE and a second secure area that provides the plurality of TEEs, and
wherein the instructions cause the processor to obtain the capability information, based on a fact that the plurality of TEEs are loaded from the second secure area to the first secure area.

4. The electronic device of claim 1, wherein the instructions cause the processor to obtain the capability information, based on a fact that the plurality of TEEs are installed in the first memory.

5. The electronic device of claim 1, further comprising a communication circuit,
wherein the instructions cause the processor to:
receive capability information of a TEE installed in a cloud edge network via the communication circuit; and
provide the received capability information to the application.

6. The electronic device of claim 1, further comprising a sensor and a camera,
wherein at least one of the plurality of TEEs executes a function related to security by using the sensor and the camera.

7. The electronic device of one of claims 1 to 6, wherein the processor comprises a normal processor for executing the REE and a first secure processor for executing at least one of the plurality of TEEs, and
wherein the electronic device comprises a second secure processor for executing at least one of the plurality of TEEs.

8. The electronic device of claim 7, wherein the second secure processor comprises a first processing module configured to support a root of trust, RoT, function to one of the plurality of TEEs, a second processing module configured to support a trustable user interface to another one of the plurality of TEEs, a third processing module configured to support an online financial service to another one of the plurality of TEEs, and a fourth processing module configured to support an encryption function to another one of the plurality of TEEs.

9. A method of operating an electronic device that comprises a first memory divided into a first normal area that provides a rich execution environment, REE, and a first secure area that provides a plurality of trusted execution environments, TEEs, to which access by software executed in the REE is controllable, the method comprising:
obtaining, from the plurality of TEEs, capability information indicating functions that the plurality of TEEs are capable of executing; and
providing the capability information to an application executed in the REE so that the application identifies, based on the capability information, a TEE capable of executing a required function from among the plurality of TEEs, and requests the recognized TEE to execute the required function.

10. The method of claim 9, further comprising:
receiving, by a first TEE which is one of the plurality of TEEs, a request of the application;
receiving a request of a second TEE which is another one of the plurality of TEEs, the request requesting identifying and reporting of whether the first TEE has a privilege as an agent;
providing an identification result indicating that the first TEE has a privilege as an agent to the second TEE; and
based on the identification result, executing, by the second TEE, a function corresponding to the request of the application transferred via the first TEE.

11. The method of claim 9, wherein the first memory is a volatile memory, and the electronic device comprises a second memory that is connected to a processor of the electronic device and is a non-volatile memory divided into a second normal area that provides the REE and a second secure area that provides the plurality of TEEs, and the capability information is obtained based on a fact that the plurality of TEEs are loaded from the second secure area to the first secure area.

12. The method of claim 9, wherein the capability information is obtained based on a fact that the plurality of TEEs are installed in the first memory.

13. The method of one of claims 9 to 12, wherein the providing of the capability information comprises:
receiving capability information of a TEE installed in a cloud edge network via a communication circuit of the electronic device; and
providing the received capability information to the application.

## Patentansprüche

1. Elektronische Vorrichtung, umfassend:
einen Prozessor; und
einen ersten Speicher, der mit dem Prozessor verbunden und in einen ersten normalen Bereich, der eine umfangreiche Ausführungsumgebung, REE, bereitstellt, und in einen ersten sicheren Bereich unterteilt ist, der eine Vielzahl von vertrauenswürdigen Ausführungsumgebungen, TEEs, bereitstellt, auf die der Zugriff durch in der REE ausgeführte Software steuerbar ist,
wobei der erste Speicher Anweisungen speichert, die, wenn sie vom Prozessor ausgeführt werden, den Prozessor veranlassen zum:
Erhalten von Fähigkeitsinformationen von der Vielzahl von TEEs, die Funktionen anzeigen, die die Vielzahl von TEEs ausführen kann; und
Bereitstellen der Fähigkeitsinformationen an eine in der REE ausgeführte Anwendung, so dass die Anwendung basierend auf den Fähigkeitsinformationen eine TEE aus der Vielzahl von TEEs identifiziert, die in der Lage ist, eine erforderliche Funktion auszuführen, und die erkannte TEE auffordert, die erforderliche Funktion auszuführen.

2. Elektronische Vorrichtung nach Anspruch 1, wobei eine erste TEE, einer der Vielzahl von TEEs, konfiguriert ist, um eine Anforderung von der Anwendung zu empfangen, und
wobei die Anweisungen den Prozessor veranlassen, eine Anforderung einer zweiten TEE zu empfangen, bei der es sich um eine andere aus der Vielzahl von TEEs handelt, wobei die Anforderung eine Identifizierung und Meldung darüber anfordert, ob die erste TEE ein Privileg als Agent aufweist, und ein Identifizierungsergebnis zu liefern, das anzeigt, dass die erste TEE ein Privileg als Agent für die zweite TEE aufweist, und
wobei die zweite TEE so konfiguriert ist, dass sie basierend auf dem Identifikationsergebnis eine Funktion ausführt, die der Anforderung der über die erste TEE übertragenen Anwendung entspricht.

3. Elektronische Vorrichtung nach Anspruch 1, wobei der erste Speicher ein flüchtiger Speicher ist und die elektronische Vorrichtung einen zweiten Speicher umfasst, der mit dem Prozessor verbunden ist und ein nichtflüchtiger Speicher ist, der in einen zweiten normalen Bereich, der die REE bereitstellt, und in einen zweiten sicheren Bereich, der die Vielzahl von TEEs bereitstellt, unterteilt ist, und
wobei die Anweisungen den Prozessor veranlassen, die Fähigkeitsinformationen basierend auf der Tatsache zu erhalten, dass die Vielzahl von TEEs aus dem zweiten sicheren Bereich in den ersten sicheren Bereich geladen werden.

4. Elektronische Vorrichtung nach Anspruch 1, wobei die Anweisungen den Prozessor veranlassen, die Fähigkeitsinformationen basierend auf der Tatsache zu erhalten, dass die Vielzahl von TEEs in dem ersten Speicher installiert ist.

5. Elektronische Vorrichtung nach Anspruch 1, ferner umfassend eine Kommunikationsschaltung,
wobei die Anweisungen den Prozessor veranlassen zum:
Erhalten der Fähigkeitsinformationen einer in einem Cloud-Edge-Netzwerk installierten TEE über die Kommunikationsschaltung; und
Bereitstellen der empfangenen Fähigkeitsinformationen an die Anwendung.

6. Elektronische Vorrichtung nach Anspruch 1, ferner umfassend einen Sensor und eine Kamera,
wobei mindestens eine der Vielzahl von TEEs eine sicherheitsrelevante Funktion unter Verwendung des Sensors und der Kamera ausführt.

7. Elektronische Vorrichtung nach einem der Ansprüche 1 bis 6, wobei der Prozessor einen normalen Prozessor zum Ausführen der REE und einen ersten sicheren Prozessor zum Ausführen von mindestens einer der Vielzahl von TEEs umfasst, und
wobei die elektronische Vorrichtung einen zweiten sicheren Prozessor zur Ausführung von mindestens einer der Vielzahl von TEEs umfasst.

8. Elektronische Vorrichtung nach Anspruch 7, wobei der zweite sichere Prozessor ein erstes Verarbeitungsmodul, das so konfiguriert ist, dass es eine Vertrauensanker-, RoT-,Funktion für eine der Vielzahl von TEEs unterstützt, ein zweites Verarbeitungsmodul, das so konfiguriert ist, dass es eine vertrauenswürdige Benutzerschnittstelle für eine andere aus der Vielzahl von TEEs unterstützt, ein drittes Verarbeitungsmodul, das so konfiguriert ist, dass es einen Online-Finanzdienst für eine andere aus der Vielzahl von TEEs unterstützt, und ein viertes Verarbeitungsmodul umfasst, das so konfiguriert ist, dass es eine Verschlüsselungsfunktion für eine andere aus der Vielzahl von TEEs unterstützt.

9. Betriebsverfahren einer elektronischen Vorrichtung, die einen ersten Speicher umfasst, der in einen ersten normalen Bereich, der eine umfangreiche Ausführungsumgebung, REE, bereitstellt, und einen ersten sicheren Bereich unterteilt ist, der eine Vielzahl von vertrauenswürdigen Ausführungsumgebungen, TEEs, bereitstellt, auf die der Zugriff durch in der REE ausgeführte Software steuerbar ist, wobei das Verfahren umfasst:
Erhalten von Fähigkeitsinformationen von der Vielzahl von TEEs, die Funktionen anzeigen, die die Vielzahl von TEEs ausführen kann; und
Bereitstellen der Fähigkeitsinformationen an eine in der REE ausgeführte Anwendung, so dass die Anwendung basierend auf den Fähigkeitsinformationen eine TEE aus der Vielzahl von TEEs identifiziert, die in der Lage ist, eine erforderliche Funktion auszuführen, und die erkannte TEE auffordert, die erforderliche Funktion auszuführen.

10. Verfahren nach Anspruch 9, ferner umfassend:
Empfangen einer Anforderung der Anwendung durch eine erste TEE, die eine aus der Vielzahl von TEEs ist;
Empfangen einer Anforderung einer zweiten TEE, bei der es sich um eine andere aus der Vielzahl von TEEs handelt, wobei die Anforderung eine Identifizierung und Meldung darüber anfordert, ob die erste TEE ein Privileg als Agent aufweist;
Bereitstellen eines Identifizierungsergebnisses, das angibt, dass die erste TEE ein Privileg als Agent für die zweite TEE aufweist; und
basierend auf dem Identifikationsergebnis, Ausführen einer Funktion durch die zweite TEE, die der Anforderung der über die erste TEE übertragenen Anwendung entspricht.

11. Verfahren nach Anspruch 9, wobei der erste Speicher ein flüchtiger Speicher ist und die elektronische Vorrichtung einen zweiten Speicher umfasst, der mit einem Prozessor der elektronischen Vorrichtung verbunden ist und ein nichtflüchtiger Speicher ist, der in einen zweiten normalen Bereich, der die REE bereitstellt, und einen zweiten sicheren Bereich, der die Vielzahl von TEEs bereitstellt, unterteilt ist, und die Fähigkeitsinformation basierend auf der Tatsache erhalten wird, dass die Vielzahl von TEEs aus dem zweiten sicheren Bereich in den ersten sicheren Bereich geladen wird.

12. Verfahren nach Anspruch 9, wobei die Fähigkeitsinformation basierend auf der Tatsache erhalten wird, dass die Vielzahl von TEEs in dem ersten Speicher installiert ist.

13. Verfahren nach einem der Ansprüche 9 bis 12, wobei das Bereitstellen der Fähigkeitsinformationen Folgendes umfasst:
Empfangen von Fähigkeitsinformationen einer in einem Cloud-Edge-Netzwerk installierten TEE über eine Kommunikationsschaltung der elektronischen Vorrichtung; und
Bereitstellen der empfangenen Fähigkeitsinformationen an die Anwendung.

## Revendications

1. Dispositif électronique, comprenant :
un processeur ; et
une première mémoire connectée au processeur et divisée en une première zone normale qui fournit un environnement d'exécution riche, REE, et une première zone sécurisée qui fournit une pluralité d'environnements d'exécution de confiance, TEE, auxquels l'accès par un logiciel exécuté dans le REE peut être commandé,
dans lequel la première mémoire stocke des instructions qui, lorsqu'elles sont exécutées par le processeur, amènent le processeur à :
obtenir, auprès de la pluralité de TEE, des informations de capacité indiquant les fonctions que la pluralité de TEE est capable d'exécuter ; et
fournir les informations de capacité à une application exécutée dans le REE de sorte que l'application identifie, en se basant sur les informations de capacité, un TEE capable d'exécuter une fonction requise parmi la pluralité de TEE, et demande au TEE reconnu d'exécuter la fonction requise.

2. Dispositif électronique de la revendication 1, dans lequel un premier TEE, l'un de la pluralité de TEE, est configuré pour recevoir une demande de la part de l'application, et
dans lequel les instructions amènent le processeur à recevoir une demande d'un second TEE qui est un autre de la pluralité de TEE, la demande d'identification et de rapport indiquant si le premier TEE a un privilège en tant qu'agent, et à fournir un résultat d'identification indiquant que le premier TEE a un privilège en tant qu'agent au second TEE, et
dans lequel le second TEE est configuré pour exécuter, en se basant sur le résultat de l'identification, une fonction correspondant à la demande de l'application transférée via le premier TEE.

3. Dispositif électronique de la revendication 1, dans lequel la première mémoire est une mémoire volatile, et le dispositif électronique comprend une seconde mémoire, qui est connectée au processeur et est une mémoire non volatile divisée en une seconde zone normale qui fournit le REE et une seconde zone sécurisée qui fournit la pluralité de TEE, et
dans lequel les instructions amènent le processeur à obtenir les informations de capacité, en se basant sur le fait que la pluralité de TEE est chargée de la seconde zone sécurisée vers la première zone sécurisée.

4. Dispositif électronique de la revendication 1, dans lequel les instructions amènent le processeur à obtenir les informations de capacité, en se basant sur le fait que la pluralité de TEE est installée dans la première mémoire.

5. Dispositif électronique de la revendication 1, comprenant en outre un circuit de communication,
dans lequel les instructions amènent le processeur à :
recevoir des informations de capacité d'un TEE installé dans un réseau de périphérie de nuage via le circuit de communication ; et
fournir à l'application les informations de capacité reçues.

6. Dispositif électronique de la revendication 1, comprenant en outre un capteur et une caméra,
dans lequel au moins un de la pluralité de TEE exécute une fonction liée à la sécurité en utilisant le capteur et la caméra.

7. Dispositif électronique de l'une des revendications 1 à 6, dans lequel le processeur comprend un processeur normal pour l'exécution du REE et un premier processeur sécurisé pour l'exécution d'au moins un de la pluralité de TEE, et
dans lequel le dispositif électronique comprend un second processeur sécurisé pour l'exécution d'au moins un de la pluralité de TEE.

8. Dispositif électronique de la revendication 7, dans lequel le second processeur sécurisé comprend un premier module de traitement configuré pour prendre en charge une fonction de racine de confiance, RoT, pour l'un de la pluralité de TEE, un second module de traitement configuré pour prendre en charge une interface utilisateur fiable pour un autre de la pluralité de TEE, un troisième module de traitement configuré pour prendre en charge un service financier en ligne pour un autre de la pluralité de TEE, et un quatrième module de traitement configuré pour prendre en charge une fonction de cryptage pour un autre de la pluralité de TEE.

9. Procédé de fonctionnement d'un dispositif électronique comprenant une première mémoire divisée en une première zone normale qui fournit un environnement d'exécution riche, REE, et une première zone sécurisée qui fournit une pluralité d'environnements d'exécution de confiance, TEE, auxquels l'accès par un logiciel exécuté dans le REE peut être commandé, le procédé comprenant :
obtenir, auprès de la pluralité de TEE, des informations de capacité indiquant les fonctions que la pluralité de TEE est capable d'exécuter ; et
fournir les informations de capacité à une application exécutée dans le REE de sorte que l'application identifie, en se basant sur les informations de capacité, un TEE capable d'exécuter une fonction requise parmi la pluralité de TEE, et demande au TEE reconnu d'exécuter la fonction requise.

10. Procédé de la revendication 9, comprenant en outre :
recevoir, par un premier TEE qui est un de la pluralité de TEE, une demande de l'application ;
recevoir une demande d'un second TEE qui est un autre de la pluralité de TEE, la demande demandant d'identifier et de signaler si le premier TEE dispose d'un privilège en tant qu'agent ;
fournir un résultat d'identification indiquant que le premier TEE dispose d'un privilège en tant qu'agent du second TEE ; et
en se basant sur le résultat de l'identification, exécuter, par le second TEE, une fonction correspondant à la demande de l'application transférée via le premier TEE.

11. Procédé de la revendication 9, dans lequel la première mémoire est une mémoire volatile, et le dispositif électronique comprend une seconde mémoire qui est connectée à un processeur du dispositif électronique et est une mémoire non volatile divisée en une seconde zone normale qui fournit le REE et une seconde zone sécurisée qui fournit la pluralité de TEE, et l'information de capacité est obtenue en se basant sur le fait que la pluralité de TEE est chargée de la seconde zone sécurisée à la première zone sécurisée.

12. Procédé de la revendication 9, dans lequel l'information de capacité est obtenue en se basant sur le fait que la pluralité de TEE est installée dans la première mémoire.

13. Procédé de l'une des revendications 9 à 12, dans lequel la fourniture des informations de capacité comprend :
recevoir des informations de capacité d'un TEE installé dans un réseau de périphérie de nuage par l'intermédiaire d'un circuit de communication du dispositif électronique ; et
fournir à l'application les informations de capacité reçues.
